Europäisches Patentamt

**European Patent Office**

Office européen des brevets

(19)

(11) Numéro de publication: **0 201 527**
**B1**

(12) **FASCICULE DE BREVET EUROPEEN**

(45) Date de publication du fascicule du brevet: **04.07.90**

(51) Int. Cl.⁵: **G 05 D 23/275, H 05 B 1/02**

(21) Numéro de dépôt: **85905223.5**

(22) Date de dépôt: **25.10.85**

(86) Numéro de dépôt international:
**PCT/FR85/00303**

(87) Numéro de publication internationale:
**WO 86/03035 22.05.86 Gazette 86/11**

(54) **PROCEDE ET DISPOSITIF POUR REDUIRE LA FOURCHETTE DE TEMPERATURE D'UN THERMOSTAT MECANIQUE.**

(30) Priorité: **07.11.84 FR 8417156**

(43) Date de publication de la demande:
**20.11.86 Bulletin 86/47**

(45) Mention de la délivrance du brevet:
**04.07.90 Bulletin 90/27**

(84) Etats contractants désignés:
**AT BE CH DE GB IT LI NL SE**

(56) Documents cités:
**EP-A-0 037 638**
**FR-A-2 343 286**
**FR-A-2 530 109**
**US-A-4 191 879**

(73) Titulaire: **GIRAUD, Gabriel**
**187, boulevard Périer**
**F-13008 Marseille (FR)**

(72) Inventeur: **GIRAUD, Gabriel**
**187, boulevard Périer**
**F-13008 Marseille (FR)**

(74) Mandataire: **Moretti, René et al**
**c/o Cabinet BEAU DE LOMENIE "Prado-Mermoz"**
**232, Avenue du Prado**
**F-13008 Marseille (FR)**

EP 0 201 527 B1

## Description

La présente invention a pour objet un procédé et un dispositif pour réduire la fourchette de température d'un thermostat mécanique.

Le secteur technique de l'invention est celui des matériels de régulation mécanique trouvant notamment leur application dans les convecteurs à fonctionnement électrique.

Actuellement plusieurs types de thermostats sont utilisés pour la régulation des convecteurs électriques: les thermostats à bilames, les thermostats à dilatation de liquide à bulbe, les thermostats à tension de vapeur à capillaire, les thermostats électroniques.

On connaît également des thermostats à tension de vapeur ou à bulbe dits "accélérés" et également de tels thermostats "accélérés" et "compensés".

Le thermostat à bilame est d'une conception simple mais présente l'inconvénient d'être bruyant et fonctionne selon un grand différentiel statique, c'est-à-dire que l'écart de température entre le déclenchement de la mise en marche et de l'arrêt de l'appareil est très important. Les thermostats à bulbe et à capillaire fonctionnent suivant un différentiel statique réduit par rapport au thermostat à bilame mais ce différentiel est encore relativement important.

Le thermostat électronique fonctionne suivant un différentiel statique extrêmement réduit, mais un tel thermostat est un appareillage onéreux.

Les thermostats à bulbe ou à capillaire accélérés comportent une résistance additionnelle qui est mise sous tension à chaque enclenchement de la résistance chauffante et qui reste sous tension jusqu'à la coupure du thermostat.

Cette résistance additionnelle chauffe le détecteur, par exemple le bulbe, ce qui provoque la coupure du thermostat par "anticipation".

De tels appareillages permettent de réduire le différentiel statique à une valeur très acceptable; toutefois le prix de revient d'un tel thermostat, bien que d'un prix inférieur à un thermostat électronique, est encore relativement élevé.

On connaît également le brevet FR-A-2.343.286, lequel a pour objet une disposition de régulateur de température avec un capteur à liquide pour un radiateur direct dans laquelle le régulateur de température se compose d'une tête 12, d'un élément capteur 11 et d'un tube capillaire 15 reliant la tête du régulateur à l'élément capteur.

L'objectif à atteindre, selon ce brevet, est d'obtenir une oscillation aussi réduite que possible de la régulation.

Ce document décrit un dispositif dans lequel l'élément de capteur 11 est disposé en un lieu du radiateur qui est protégé contre l'action thermique des éléments chauffants 4 et 5 et la fraction du contenu liquide totale du régulateur de température qui est déterminante pour la réaction exigée et qui est répartie entre la tête 12 du régulateur et le tube capillaire 15, est couplée thermiquement aux éléments chauffants 4/5, de telle sorte que l'oscillation résultant de la réaction et l'incidence de la charge sont rendues optimales quant à leur répercussion sur le processus de régulation.

Le dispositif selon ce brevet n'est pas conçu pour concentrer sur le détecteur (ou capteur) d'un thermostat mécanique, la chaleur rayonnée d'une source de chaleur, par exemple l'èlèment chauffant d'un convecteur électrique, mais le brevet expose que le capteur est protégé du rayonnement émis par les éléments chauffants par des déflecteurs, la réduction de l'oscillation de la régulation étant obtenue en couplant, donc en reliant, l'élément chauffant du radiateur à une boucle du capillaire, celui-ci êtant monté en température par conduction du fait de sa liaison avec l'élément chauffant. Dans ce dispositif, l'influence du rayonnement de l'élément chauffant sur ledit capillaire n'a aucun effet, du fait que le capillaire est au contact de l'élément chauffant. En outre, ce dispositif ne comporte pas de réflecteur.

La présente invention vise à remédier à ces inconvénients.

L'objectif à atteindre est un dispositif réducteur de fourchette de température permettant des performances se rapprochant de celles d'un thermostat accéléré classique en utilisant le rayonnement d'une source de chaleur, par exemple la résistance chauffante d'un convecteur électrique dans le but de permettre la mise en oeuvre de convecteurs électriques assurant un excellent confort à un prix de revient compétitif.

Cet objectif est atteint par le procédé selon l'invention pour réduire la fourchette de température d'un thermostat mécanique comportant un détecteur constitué par un bulbe ou un capillaire enroulé en spires ou droit, auquel on a fait subir un traitement de surface pour le rendre plus absorbant, caractérisé en ce que l'on place ledit détecteur devant une paroi rayonnante reliée à une source de chaleur et on entoure partiellement le détecteur par un réflecteur placé devant la paroi pour concentrer sur le détecteur le rayonnement émis par ladite paroi.

L'objectif est également atteint par le dispositif selon l'invention pour réduire la fourchette de température d'un thermostat mécanique comportant un détecteur constitué par un bulbe ou par un capillaire enroulé en spires ou droit, auquel on a fait subir un traitement de surface pour le rendre plus absorbant, lequel dispositif est destiné à un convecteur de chaleur électrique comportant un échangeur de chaleur s'étendant dans le sens de la longueur du convecteur, lequel comporte à l'une des extrémités dudit échangeur, un conduit perpendiculaire à celui-ci et s'êtendant sur la hauteur du convecteur dans lequel conduit est placé le thermostat, caractérisé en ce que ledit conduit est délimité, du côté de l'échangeur, par une paroi mise au contact dudit échangeur, laquelle paroi rayonne du côté du conduit et en ce que le détecteur est placé dans une cheminée d'une forme générale demi-cylindrique, laquelle entoure partiellement le détecteur et dont sa partie latérale ouverte est située devant la face rayonnante de ladite paroi et que la face interne de ladite cheminée est réfléchissante sur tout ou partie de sa hauteur pour renvoyer sur le détecteur le rayonnement émis par ladite paroi rayonnante.

Le conduit dans lequel est disposé le thermostat est fermé à sa partie inférieure par une plaque comportant une ouverture qui s'inscrit dans l'espace délimité par ladite cheminée. Celle-ci est située à proximité de ladite plaque de fond du conduit et ladite ouverture débouche à l'intérieur de la cheminée.

Dans un dispositif selon l'invention, le détecteur du thermostat est un capillaire enroulé suivant des spires hélicoïdales et adopte une forme générale cylindrique; ledit détecteur est maintenu en position dans la partie centrale de la cheminée par un support en forme de peigne fixé à la paroi de celle-ci et dont les crénelures entourent étroitement au moins une des spires du détecteur. Ledit peigne coopère avec une crémaillère crénelée dont les crénelures correspondent à celles du peigne pour maintenir prisonnières les spires du détecteur.

Dans un autre mode d'exécution, la crémaillère est remplacée par deux ailes parallèles entre elles et espacées l'une de l'autre d'une distance sensiblement égale à l'épaisseur du peigne et entre lesquelles les crénelures du peigne sont engagées pour maintenir prisonnières les spires du détecteur.

Dans les modes d'exécution définis ci-dessus, le peigne sert aussi à maintenir entre les spires une certaine distance et ce de façon constante.

Ladite plaque de fond comporte des montants flexibles orthogonaux à la paroi dont la longueur est légèrement supérieure à la hauteur de la cheminée, lesquels montants se placent à proximité de la face externe de la cheminée et comportent à leur extrémité des reliefs pour verrouiller celle-ci en position par agrafage.

Lesdits montants sont au nombre de deux et sont disposés en opposition de part et d'autre de la partie demi-cylindrique de la cheminée. Celle-ci comporte une paroi demi-cylindrique prolongée par deux parties planes parallèles entre elles, dont les bords libres parallèles aux génératrices de la partie demi-cylindrique comportent des agrafes pour assurer la fixation d'un miroir d'une configuration analogue à celle de la cheminée et maintenir ledit miroir contre la face interne de la paroi.

Dans un dispositif selon l'invention, dont le détecteur est un bulbe droit, ledit bulbe est maintenu en position dans la partie centrale de la cheminée par au moins un support fixé à la paroi de la cheminée et dont l'extrémité libre entoure étroitement ledit bulbe.

Dans un mode de réalisation, ledit dispositif comporte deux supports situés dans le plan de symétrie de la cheminée dont l'un forme un logement dans lequel est introduite l'extrémité du bulbe et dont l'autre forme une agrafe et comporte des empreintes coniques pour être mises au contact de la partie conique du bulbe.

La cheminée comporte des fenêtres dans lesquelles s'engagent les reliefs desdits montants pour verrouiller la cheminée par agrafage.

Les faces externes de la cheminée sont réfléchissantes pour renvoyer les rayonnements parasites qui tendent à réchauffer l'air d'aspiration et ainsi fausser l'information captée par le détecteur.

Au cours d'essais réalisés en laboratoire, il a été permis de déterminer qu'il était favorable de régler le rapport rayonnement/débit d'air avec à la fois: un fort rayonnement et un fort débit d'air, de façon à obtenir un fonctionnement correct aux faibles charges pour lesquelles le tirage est faible. C'est la raison pour laquelle le détecteur est largement ventilé à la partie inférieure de la cheminée.

Dans le mode d'exécution où le détecteur est un capillaire, celui-ci reçoit l'information de la température de l'air du bas de la pièces par:

a) l'air de convection qui traverse les spires sous l'influence du tirage à travers le réflecteur formant conduit autour du capillaire, le tirage étant généré par la hauteur du conduit dans lequel est placé le thermostat et qui s'étend sur la hauteur du convecteur;

b) le réflecteur formant conduit autour des spires actives du thermostat, les isole de l'influence des parois du convecteur et réduit au maximum les informations parasites;

c) la ventilation du capillaire est une grandeur cyclique de même fréquence que la fréquence d'enclenchement du thermostat.

Le capillaire reçoit la chaleur donnant l'accélération du thermostat:

a) par rayonnement direct à travers la partie ouverte de la cheminée, du support de l'échangeur qui est à haute température;

b) par rayonnement indirect réfléchi par le réflecteur, celui-ci, par sa forme, la nature du métal ou son revêtement réfléchissant concentre sur le capillaire le maximum de rayonnement émis par le support de l'échangeur. L'information reçue par le capillaire est transmise avec un minimum d'inertie et est comparable à celle qui serait émise par une résistance additionnelle.

La chaleur transmise par rayonnement est une grandeur cyclique de même fréquence que celle d'enclenchement du thermostat. Il en découle que les informations transmises au capillaire: la ventilation par l'air de convection et la chaleur de l'échangeur sont toutes les deux de même fréquence et sensiblement en phase.

D'autres avantages et les caractéristiques de l'invention sont donnés dans la description suivante d'un mode de réalisation non limitatif d'un dispositif de régulation d'un convecteur de chaleur à fonctionnement électrique, en référence au dessin annexé sur lequel:

la figure 1 est une vue en perspective partielle illustrant la partie inférieure d'un convecteur où est monté le dispositif selon l'invention dont le détecteur est un capillaire enroulé en hélice;

la figure 2 est une vue en perspective partielle illustrant la partie inférieure d'un convecteur où est monté le dispositif selon l'invention dont le détecteur est un bulbe droit;

la figure 3 est une vue de dessus de la plaque qui obture le fond dudit conduit dans lequel est placé le thermostat;

la figure 4 est une vue en élévation de la plaque de la figure 3;

la figure 5 est une vue suivant F de la plaque illustrée à la figure 4;

la figure 6 est une vue de dessus de la cheminée;

la figure 7 est une vue en coupe de la cheminée de la figure 6 suivant la ligne VI-VI;

la figure 8 est une vue suivant $F_1$ de la cheminée illustrée à la figure 7;

la figure 9 est une vue en coupe diamétrale de la cheminée dans laquelle est placé le détecteur du thermostat tenu en position au moyen d'un peigne;

la figure 10 est une vue en élévation d'un peigne dans un mode d'exécution;

la figure 11 est une vue en élévation/coupe partielle de la cheminée comportant une crémaillère dans un mode d'exécution adapté pour coopérer avec le peigne de la figure 10;

la figure 12 est une vue de dessus partielle de la cheminée illustrant la crémaillère de la figure 11;

la figure 13 est une vue en élévation d'un peigne selon un autre mode d'exécution;

la figure 14 est une vue en élévation/coupe partielle de la cheminée comportant une crémaillère dans un autre mode d'exécution adapté pour coopérer avec le peigne de la figure 13;

la figure 15 est une vue de dessus du peigne de la figure 13;

la figure 16 est une vue de dessus partielle de la cheminée illustrant la crémaillère de la figure 14.

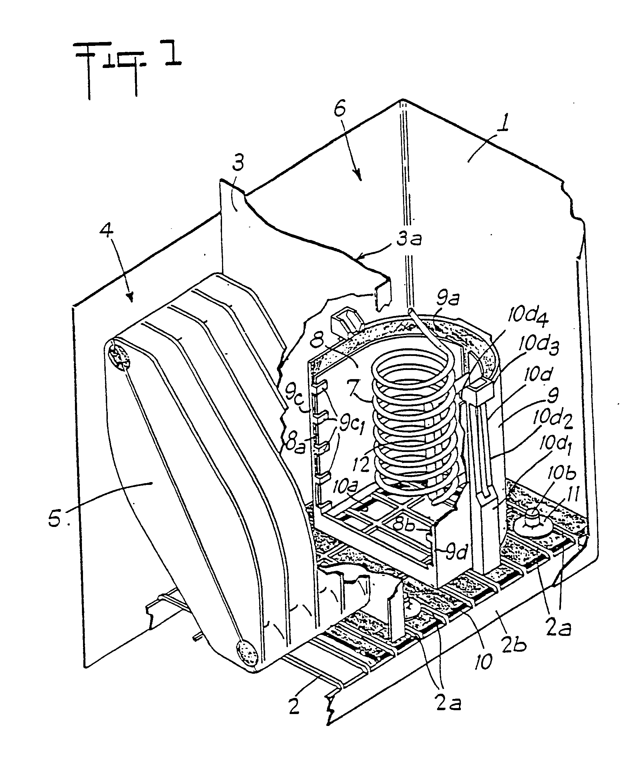

On se reporte d'abord à la figure 1 du dessin qui représente la partie inférieure d'un convecteur comportant un caisson 1 comprenant quatre parois latérales parallèles deux à deux et dont l'ouverture inférieure est partiellement masquée par une grille de protection 2. Ledit caisson est divisé en deux compartiments par une paroi-support 3 s'étendant perpendiculairement aux parois avant et arrière du caisson. Un de ces compartiments 4 est de plus grandes dimensions et est destiné à recevoir l'élément chauffant, par exemple un échangeur de chaleur à fonctionnement électrique 5, lequel est disposé dans le sens longitudinal du caisson et est situé à faible distance de la grille 2 et parallèlement à celle-ci. Ledit échangeur est fixé, par ses extrémités, à l'une des parois du caisson (non représentée) et à ladite paroi-support 3. L'autre compartiment 6 est de plus petites dimensions et forme un conduit d'une section droite rectangulaire ou carrée s'étendant sur la hauteur du caisson. Ce conduit est destiné à recevoir le thermostat et sa sonde. De façon connue, le thermostat (non représenté) est monté à la partie supérieure du convecteur de manière à faciliter la manoeuvre de sa commande. La sonde du thermostat est par exemple un capillaire dont une partie est enroulée en hélice pour former un détecteur d'une forme générale cylindrique 7. La sonde traverse ainsi le conduit 6 dans le sens de sa longueur, de telle sorte que le détecteur se situe à proximité de la grille 2 et en face de la paroi-support 3. Par exemple, le détecteur se trouve à 15 mm de la grille 2. Selon l'invention, on fait subir au capillaire un traitement de surface pour une meilleure absorption de la chaleur. Ce traitement de surface consiste par exemple à oxyder le capillaire ou plus simplement à recouvrir le capillaire d'une peinture noire.

La paroi-support 3 est réalisée par exemple en aluminium dont la face 3a, située du côté du détecteur 7 est de préférence de couleur noire afin d'émettre le maximum de chaleur rayonnée. La paroi-support 3 est montée en température par conduction par l'échangeur 5 auquel elle est reliée. Le rayonnement émis par la face 3a de la plaque 3 est capté par le détecteur 7 du thermostat. Dans le but de concentrer le rayonnement émis par la plaque 3 sur ledit détecteur, on place autour de celui-ci un réflecteur 8, d'une forme générale demi-cylindrique, dont la partie ouverte est orientée du côté de la paroi-support 3.

Ce réflecteur 8 est monté dans une enceinte ou cheminée d'une forme générale demi-cylindrique 9, de telle sorte que le réflecteur 8 est plaqué contre la face interne 9a de ladite cheminée. La hauteur du réflecteur varie suivant la quantité de chaleur que l'on veut réfléchir.

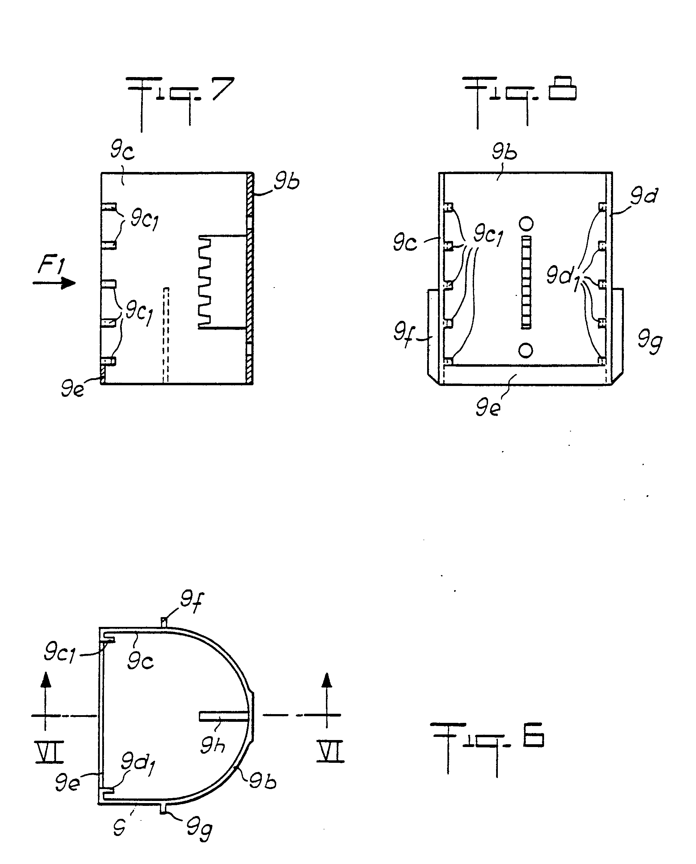

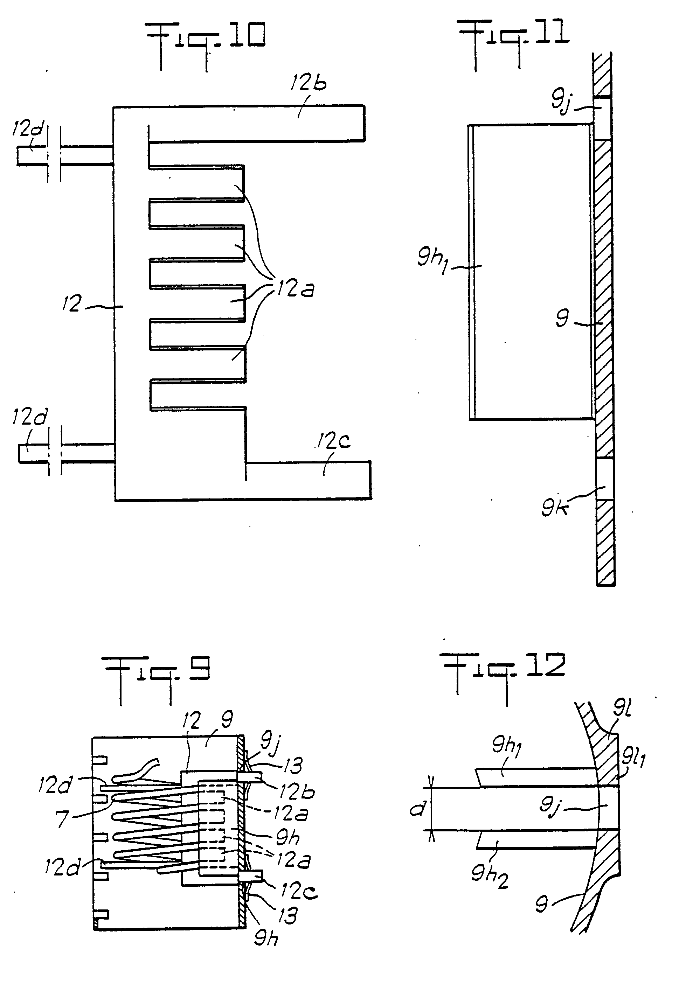

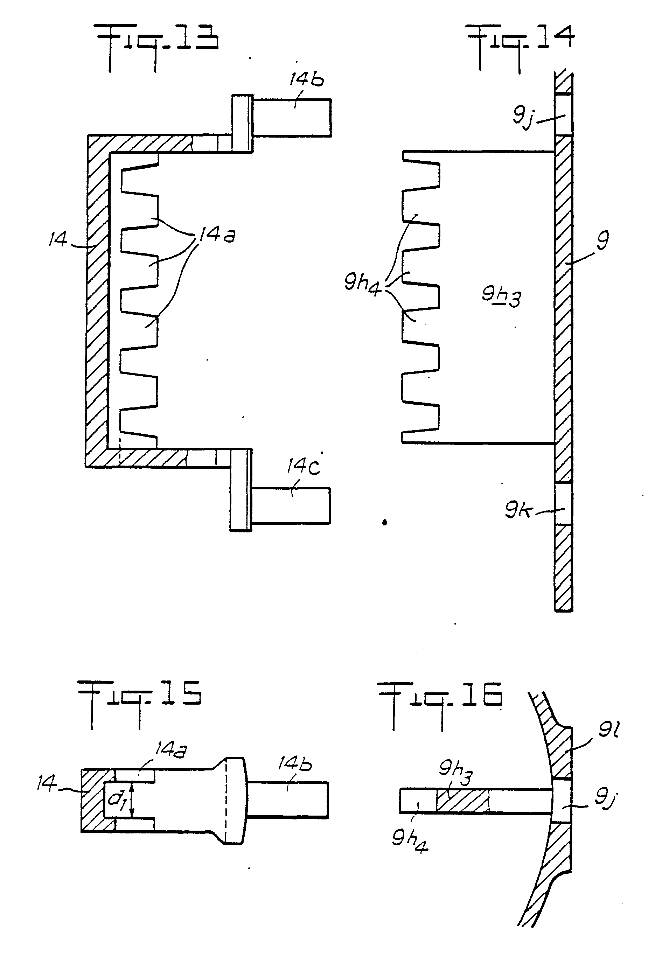

La cheminée (figures 6 à 8) comporte une partie demi-cylindrique 9b, prolongée par deux parois planes 9c/9d, parallèles entre elles, ménageant une large ouverture s'étendant sur la quasi-hauteur de la cheminée et d'une largeur égale au diamètre de la partie demicylindrique 9b. Ces deux parois 9c/9d sont reliées entre elles à la partie inférieure de la cheminée par une traverse 9e.

Les bords desdites parois 9c/9d parallèles aux génératrices de la partie cylindrique 9b comportent des retours de matière répartis sur la hauteur de la cheminée, par exemple au nombre de cinq pour chaque bord constituant des agrafes $9c_1/9d_1$ pour maintenir en position le réflecteur 8.

Comme la cheminée 9, le réflecteur 8 comporte une partie demi-cylindrique et deux parois planes parallèles entre elles, dont les bords libres 8a/8b se placent dans les agrafes $9c_1/9d_1$ de la cheminée.

Le réflecteur peut recouvrir tout ou partie de la face interne 9a de la cheminée. Il peut donc intéresser soit toute la hauteur de la cheminée pour concentrer le rayonnement sur le détecteur, soit une partie seulement de cette hauteur pour ne concentrer le rayonnement que sur une partie du détecteur 7.

Le conduit 6 est partiellement obturé à sa partie inférieure où se trouve le détecteur 7 par une plaque rectangulaire 10 comportant, dans sa partie centrale, une ouverture 10a, de même contour et de même section que la cheminée 9. Cette plaque 10 est appliquée sous la grille 2 et comporte quatre tétons de fixation 10b orthogonaux à la plaque, lesquels sont passés entre les barreaux 2a de la grille 2 et reçoivent des agrafes 11 qui sont bloquées contre lesdits barreaux 2a pour assurer la fixation de la plaque 10 à la grille 2.

Tel que cela est illustré à la figure 1, la cheminée 9 est en appui sur la grille 2 et est située au droit de l'ouverture 10a de la plaque 10, de telle sorte que celle-ci débouche dans la cheminée. Le maintien en position de la cheminée 9 est obtenu au moyen de deux montants $10c/10d$ solidaires de la plaque 10 et s'étendant orthogonalement à celle-ci du côté où se trouvent les tétons $10b$. Les deux montants sont disposés en opposition de part et d'autre de ladite ouverture $10a$ et sont situés sur le diamètre de la partie demi-circulaire de celle-ci pour se placer à proximité de la face externe de la cheminée 9.

Chaque montant $10c/10d$ comporte une partie rigide $10c_1/10d_1$ d'une section droite en U solidaire de la plaque et d'une partie flexible $10c_2/10d_2$ constituée de deux lamelles, laquelle partie flexible prolonge la partie rigide et se termine par un relief $10c_3/10d_3$ en forme de tête dont le bec $10c_4/10d_4$ est destiné à être appliqué sur le bord périphérique supérieur de la cheminée 9 pour fixer celle-ci par agrafage. Comme les tétons $10b$ les deux montants $10c/10d$ sont passés entre deux barreaux $2a$ de la grille 2. La longueur des montants $10c/10d$ est sensiblement égale à la hauteur de la cheminée augmentée de l'épaisseur des barreaux de la grille. La figure 1 du dessin illustre le montage de la cheminée dans le conduit 6 et sa fixation à la grille 2 au moyen de la plaque 10 et de ses montants $10c/10d$.

La plaque 10 comporte encore, du côté de sa face opposée à celle à partir de laquelle s'étendent les tétons $10b$ et les montants $10c/10d$, deux ailes $10e/10f$ orthogonales à ladite face, dont l'aile $10e$ s'étend transversalement à la plaque dans le prolongement de la partie rectiligne $10a_1$ de l'ouverture $10a$ et l'autre $10f$ perpendiculaire à l'aile $10e$ s'étend longitudinalement à la plaque dans le prolongement de la partie rectiligne $10a_2$ de ladite ouverture. Ces deux ailes $10e/10f$ sont d'une hauteur sensiblement égale à la hauteur des longerons $2b$ de la grille et ont pour fonction de retenir et de canaliser l'air pour le faire passer à travers l'ouverture $10a$.

La cheminée 9 comporte en outre de part et d'autre de sa partie demi-cylindrique, deux nervures $9f/9g$ qui sont engagées dans les parties rigides $10c_1/10d_1$ des montants $10c/10d$ de manière à positionner correctement la cheminée 9 par rapport à la plaque 10.

On se reporte maintenant aux figures 1 et 9. Le dispositif selon l'invention comporte également des moyens pour maintenir en position le détecteur 7 du thermostat dans la partie centrale de la cheminée 9. Ces moyens consistent en un support en forme de peigne 12 coopérant avec une crémaillère $9h$ s'étendant à l'intérieur de la cheminée et orthogonalement à la face interne de celle-ci. De préférence et tel que cela est représenté sur le dessin, la crémaillère $9h$ est située dans le plan de symétrie de la cheminée et sensiblement à mi-hauteur de celle-ci.

Le peigne 12 et la crémaillère $9h$ peuvent adopter deux formes de réalisation différentes.

Dans un mode de réalisation illustré aux figures 9 à 12, la crémaillère est constituée de deux parois $9h_1/9h_2$ situées de part et d'autre du plan de symétrie de la cheminée et espacées l'une de l'autre d'une distance d sensiblement égale à l'épaisseur du peigne 12. Celui-ci (figure 10) comporte une crénelure dont les créneaux $12a$ sont espacés l'un de l'autre d'une valeur légèrement supérieure au diamètre extérieur du capillaire. Ledit peigne comporte, à ses extrémités, deux prolongements cylindriques $12b/12c$ parallèles entre eux et aux créneaux $12a$, lesquels prolongements sont prévus pour être engagés dans des orifices $9j/9k$ réservés dans un bossage $9l$ situé dans la partie demicylindrique de la cheminée 9 et s'étendant sur sa hauteur, lequel bossage comporte une zone plane $9l_1$ située à l'extérieur de la cheminée.

Le peigne 12 est fixé à la cheminée 9 au moyen d'agrafes 13 bloquées sur ladite zone plane $9l_1$.

Ledit peigne 12 comporte en outre deux tiges, par exemple cylindriques $12d$, situées du côté des prolongements $12b/12c$ et s'étendant dans le sens opposé et parallèlement à ceux-ci, lesquelles tiges sont d'une longueur légèrement supérieure au diamètre du détecteur 7 et sont destinées à être engagées entre les spires de celui-ci et ont une fonction de support. Les créneaux $12a$, les prolongements $12b/12c$ et les tiges $12d$ sont situés dans un même plan.

On se reporte maintenant aux figures 13 à 16 qui représentent le peigne et la crémaillère dans un autre mode de réalisation. La crémaillère $9h_3$ adopte la forme d'une paroi et son bord parallèle à la paroi de la cheminée 9 comporte une crénelure dont les créneaux $9h_4$ sont d'une forme trapézoïdale et sont espacés l'un de l'autre d'une valeur légèrement supérieure au diamètre extérieur du capillaire.

Le peigne 14 comporte, comme la crémaillère $9h_3$, une crénelure dont les créneaux $14a$ correspondent aux créneaux $9h_4$ de la crémaillère et sont, comme ceux-ci, d'une forme trapézoïdale. Lesdits créneaux sont espacés l'un de l'autre d'une valeur légèrement supérieure au diamètre extérieur du capillaire. La partie du peigne qui comporte les crénelures $14a$ est d'une section droite en U et les rangées de créneaux $14a$ sont espacées l'une de l'autre d'une distance d légèrement supérieure à l'épaisseur de la crémaillère $9h_3$ (fig. 14/16).

Le peigne 14 comporte, comme le peigne 12, deux prolongements cylindriques $14b/14c$ destinés à être engagés dans des orifices $9j/9k$ réservés dans la paroi de la cheminée. La fixation du peigne 14 à la cheminée 9 est réalisée au moyen d'agrafes 13 de la même façon que pour la fixation du peigne 12 illustrée à la figure 9.

Lorsque le peigne 14 est verrouillé en position, les créneaux $14a/9h_4$ du peigne et de la crémaillère entourent étroitement les spires du détecteur 7 et assurent ainsi le maintien du détecteur 7 au centre de la cheminée.

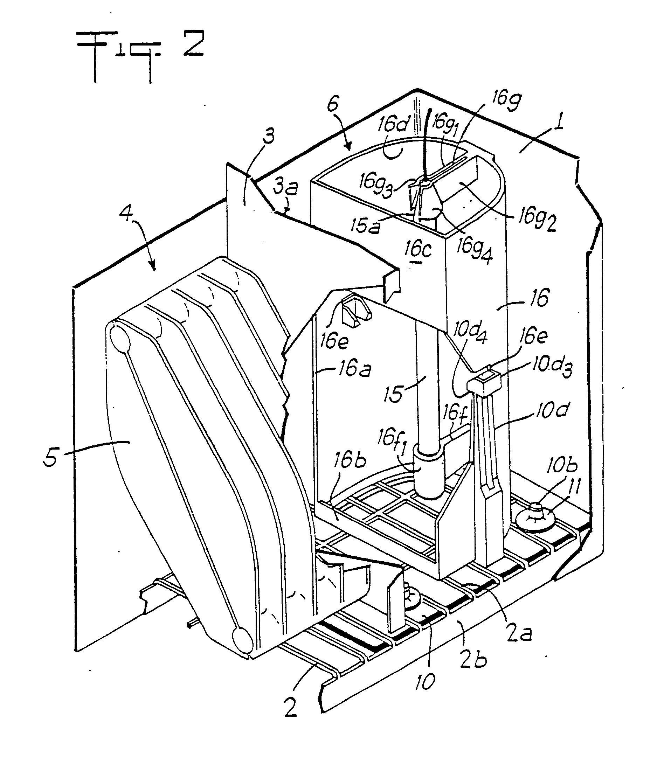

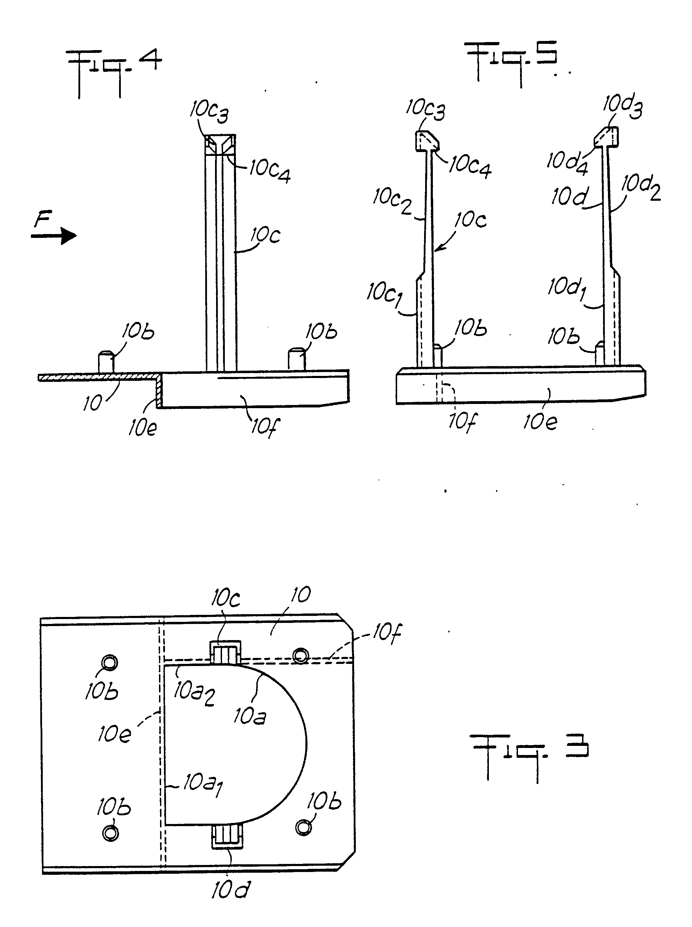

On se reporte maintenant à la figure 2 du dessin qui représente un dispositif selon l'invention dont le détecteur est un bulbe droit 15.

Ce dispositif est installé à la partie inférieure d'un convecteur tel que celui qui a déjà été décrit en référence à la figure 1.

Le bulbe 15 est placé au centre d'une cheminée 16 semblable à la cheminée 9 du dispositif de la figure 1 mais de plus grande hauteur de manière à entourer ledit bulbe. Cette cheminée 16 comporte une large ouverture 16a, orientée du côté de la paroi-support 3, laquelle ouverture est délimitée par les bords latéraux de la cheminée et par une traverse inférieure 16b et une traverse supérieure de plus grande largeur 16c. La face interne 16d de la cheminée est réfléchissante pour renvoyer sur le bulbe 15 le rayonnement émis par la paroi-support 3. La paroi de la cheminée comporte sensiblement à mi-hauteur deux fenêtres rectangulaires 16e qui sont situées en opposition et sur le diamètre de la partie demi-cylindrique de la cheminée et dans lesquelles fenêtres 16e pénètrent les reliefs en forme de tête $10c_3/10d_3$ des montants 10d de la plaque 10 dont les becs $10c_4/10d_4$ sont en appui sur le bord inférieur desdites fenêtres 16e, de manière à fixer la cheminée 16 par agrafage.

Le maintien en position du bulbe 15 au centre de la cheminée 16 est obtenu par deux supports orthogonaux à la face interne de la partie demi-cylindrique de la cheminée et situés dans le plan de symétrie de celle-ci, dont l'un inférieur 16f comporte à son extrémité libre un logement cylindrique $16f_1$ dans lequel est introduite l'extrémité inférieure du bulbe 15 et dont l'autre 16g se compose de deux lamelles $16g_1/16g_2$ parallèles entre elles comportant à leurs extrémités des empreintes coniques $16g_3/16g_4$ pour entourer la partie conique 15a du bulbe et maintenir celui-ci par agrafage.

La face externe des cheminées 9 et 16 peut être réfléchissante pour renvoyer les rayonnements parasites qui tendent à réchauffer l'air d'aspiration et de ce fait fausser l'information captée par le détecteur 7/15.

Dans un mode simplifié de réalisation, on supprime la cheminée 9/16 et la plaque de fond 10 et on place le détecteur 7/15 dans ledit conduit 6 dont les trois faces internes, qui sont situées devant et latéralement à la paroi-support 3 et qui entourent partiellement le détecteur 7/15 sont rendues réfléchissantes ou sont recouvertes d'un réflecteur pour renvoyer sur le détecteur 7/15 le rayonnement émis par la paroi-support 3.

Dans le cas où le détecteur est un capillaire 7, celui-ci est maintenu dans la partie centrale du conduit 6 en étant accroché à la grille inférieure du convecteur par tout moyen connu. Dans le cas où le détecteur est un bulbe droit 15, celui-ci est maintenu en position par des supports semblables à ceux 16f/16g décrits en référence à la figure 2 mais qui sont directement fixés à une des parois du conduit 6.

**Revendications**

1. Procédé pour réduire la fourchette de température d'un thermostat mécanique comportant un détecteur (7/15) constitué par un bulbe ou un capillaire enroulé en spires ou droit, auquel on a fait subir un traitement de surface pour le rendre plus absorbant, caractérisé en ce que l'on place ledit détecteur (7/15) devant une paroi rayonnante (3) reliée à une source de chaleur (5) et on entoure partiellement le détecteur (7/15) par un réflecteur (8, 9a) placé devant la paroi (3) pour concentrer sur le détecteur le rayonnement émis par ladite paroi (3).

2. Dispositif réducteur de fourchette de température d'un thermostat mécanique comportant un détecteur (7/15) constitué par un bulbe ou par un capillaire enroulé en spires ou droit, auquel on a fait subir un traitement de surface pour le rendre plus absorbant, lequel dispositif est destiné à un convecteur de chaleur électrique (1), comportant un échangeur de chaleur (5) s'étendant dans le sens de la longueur du convecteur, lequel comporte à l'une des extrémités dudit échangeur (5) un conduit (6) perpendiculaire à celui-ci et s'étendant sur la hauteur du convecteur, dans lequel conduit (6) est placé le thermostat, caractérisé en ce que ledit conduit (6) est délimité du côté de l'échangeur (5) par une paroi (3) mise au contact dudit échangeur, laquelle paroi rayonne du côté du conduit (6) et en ce que le détecteur (7/15) est placé dans une cheminée (9) d'une forme générale demi-cylindrique, laquelle entoure partiellement le détecteur (7/15) et dont sa partie latérale ouverte est située devant la face rayonnante (3a) de ladite paroi (3) et que la face interne (9a) de ladite cheminée est réfléchissante sur tout ou partie de sa hauteur pour renvoyer sur le détecteur (7/15) le rayonnement émis par ladite paroi rayonnante 3.

3. Dispositif selon la revendication 2, caractérisé en ce que ledit conduit (6) dans lequel est disposé le thermostat est fermé à sa partie inférieure par une plaque (10) comportant une ouverture (10a) qui s'inscrit dans l'espace délimité par ladite cheminée.

4. Dispositif selon la revendication 3, caractérisé en ce que la cheminée (9) est située à proximité de ladite plaque de fond (10) du conduit (6) et en ce que ladite ouverture (10a) débouche à l'intérieur de la cheminée (9).

5. Dispositif selon l'une quelconque des revendications 2 à 4, dont le détecteur du thermostat est un capillaire enroulé suivant des spires hélicoïdales (7) et adopte une forme générale cylindrique, caractérisé en ce que ledit détecteur (7) est maintenu en position dans la partie centrale de la cheminée (9) par un support en forme de peigne (12/14) fixé à la paroi de celle-ci et dont les crénelures entourent étroitement au moins une des spires dudit détecteur (7).

6. Dispositif selon la revendication 5, caractérisé en ce que ledit peigne (12/14) coopère avec une crémaillère $(9h_1/9h_2/9h_3)$ fixée à la partie demi-cylindrique de la cheminée (9) et s'étendant parallèlement aux génératrices de ladite partie demi-cylindrique.

7. Dispositif selon la revendication 6, caractérisé en ce que la crémaillère $(9h_3)$ est crénelée et dont les crénelures correspondent à celles du peigne (14) pour maintenir prisonnières les spires du détecteur (7).

8. Dispositif selon la revendication 6, caractérisé en ce que la crémaillère ($9h_1$/$9h_2$) est constituée par deux ailes parallèles entre elles et espacées l'une de l'autre d'une distance sensiblement égale à l'épaisseur du peigne (12) et entre lesquelles les crénelures du peigne sont engagées pour maintenir prisonnières les spires du détecteur (7).

9. Dispositif selon l'une quelconque des revendications 2 à 8, caractérisé en ce que ladite paroi de fond (10) comporte des montants flexibles (10c/10d) orthogonaux à la paroi dont la longueur est légèrement supérieure à la hauteur de la cheminée (9), lesquels montants se placent à proximité de la face externe de la cheminée et comportent à leur extrémité des reliefs ($10c_4$/$10d_4$) pour verrouiller celle-ci en position, par agrafage.

10. Dispositif selon la revendication 9, caractérisé en ce que les montants (10c/10d) sont au nombre de deux et sont disposés en opposition de part et d'autre de la partie demi-cylindrique de la cheminée (9).

11. Dispositif selon l'une quelconque des revendications 2 à 10, caractérisé en ce que la cheminée (9) comporte une paroi demi-cylindrique (9a) prolongée par deux parties planes (9c/9d) parallèles entre elles, dont les bords libres parallèles aux génératrices de ladite partie demi-cylindrique comportent des agrafes ($9c_1$/$9d_1$) pour assurer la fixation d'un réflecteur (8) d'une configuration analogue à celle de la cheminée (9) et maintenir ledit réflecteur contre la face interne (9a) de ladite paroi.

12. Dispositif selon l'une quelconque des revendications 2 à 4, dont le détecteur (15) est un bulbe droit, caractérisé en ce que ledit bulbe (15) est maintenu en position dans la partie centrale de la cheminée (16) par au moins un support (16f/16g) fixé à la paroi de la cheminée et dont l'extrémité libre entoure étroitement ledit bulbe (15).

13. Dispositif selon la revendication (12), caractérisé en ce qu'il comporte deux supports situés dans le plan de symétrie de la cheminée (16) dont l'un (16f) forme un logement dans lequel est introduite l'extrémité libre du bulbe et dont l'autre (16g) forme une agrafe et comporte des empreintes coniques ($16g_3$/$16g_4$) pour être mises au contact de la partie conique (15a) du bulbe.

14. Dispositif selon l'une quelconque des revendications 9 à 13, caractérisé en ce que la cheminée comporte des fenêtres (16e) dans lesquelles s'engagent les reliefs ($10c_4$/$10d_4$) desdits montants (10c/10d) pour verrouiller la cheminée par agrafage.

15. Dispositif selon l'une quelconque des revendications 2 à 14, caractérisé en ce que la face externe de la cheminée (9/16) est réfléchissante pour renvoyer les rayonnements parasites qui tendent à réchauffer l'air d'aspiration et ainsi fausser l'information captée par le détecteur (7/15).

**Patentansprüche**

1. Verfahren zum Verringern der Temperaturspanne eines mechanischen Thermostats mit einem durch eine Röhre oder eine schraubenförmig aufgerollte oder gerade Kapillare gebildeten Detektor (7/15), an dem eine Oberflächenbehandlung zum besseren Absorptionsvermögen vorgenommen worden ist, dadurch gekennzeichnet, daß man den Detektor (7/15) vor einer mit einer Wärmequelle (5) verbundenen Strahlungswand (3) anordnet und den Detektor (7/15) zwecks Konzentration der von der Wand (3) abgegebenen Strahlung auf den Detektor teilweise mit einem vor der Wand (3) angeordneten Reflektor (8, 9a) umgibt.

2. Vorrichtung zur Verringerung der Temperaturspanne eines mechanischen Thermostats mit einem durch eine Röhre oder eine schraubenförmig aufgerollte oder gerade Kapillare gebildeten Detektor (7/15), an dem eine Oberflächenbehandlung zum besseren Absorptionsvermögen vorgenommen worden ist, welche Vorrichtung für einen elektrischen Wärmekonvektor (1) mit einem sich in Längsrichtung des Konvektors erstreckenden Wärmeaustauscher (5) bestimmt ist und welche an einem der Enden des Austauschers (5) eine sich senkrecht zu diesem und über die Höhe des Konvektors erstreckende Leitung (6) umfaßt, in welcher Leitung (6) sich der Thermostat befindet, dadurch gekennzeichnet, daß die Leitung (6) auf der Seite des Austauschers (5) durch eine in Kontakt mit dem Austauscher stehende Wand (3) begrenzt ist, welche Wand auf der Seite der Leitung (6) strahlend ausgebildet ist, und daß der Detektor (7/15) in einem Schacht (9) von im allgemeinen halbzylindrischer Form angeordnet ist, welcher den Detektor (7/15) teilweise umschließt und dessen offener Seitenteil vor der Strahlungsseite (3a) dieser Wand (3) liegt, und daß die Innenfläche (9a) des Schachtes zwecks Zurückstrahlens der von der strahlenden Wand (3) abgegebenen Strahlung auf den Detektor (7/15) über die gesamte oder einen Teil seiner Höhe reflektierend ist.

3. Vorrichtung nach Anspruch 2, dadurch gekennzeichnet, daß die Leitung (6), in welcher sich der Thermostat befindet, in ihrem unteren Teil durch eine Platte (10) mit einer Öffnung (10a) geschlossen ist, welche dem vom Schacht begrenzten Raum eingeschrieben ist.

4. Vorrichtung nach Anspruch 3, dadurch gekennzeichnet, daß sich der Schacht (9) in der Nähe der Bodenplatte (10) der Leitung (6) befindet und daß die Öffnung (10a) in das Innere des Schachtes (9) mündet.

5. Vorrichtung nach einem der Ansprüche 2 bis 4, bei welcher der Detektor des Thermostats eine schraubenförmig aufgerollte Kapillare (7) ist und im allgemeinen zylindrische Form hat, dadurch gekennzeichnet, daß der Detektor (7) im mittleren Teil des Schachtes (9) durch einen Träger in Form eines Kammes (12/14), der an der Wand desselben befestigt ist und dessen Zähne mindestens einen der Schraubengänge des Detektors (7) eng umschließen, in Position gehalten ist.

6. Vorrichtung nach Anspruch 5, dadurch gekennzeichnet, daß der Kamm (12/14) mit einer

Wange (9h₁/9h₂/9h₃) zusammenwirkt, die am halbzylindrischen Teil des Schachtes (9) befestigt ist und sich parallel zu den Erzeugenden des halbzylindrischen Teils erstreckt.

7. Vorrichtung nach Anspruch 6, dadurch gekennzeichnet, daß die Wange (9h₃) gezahnt ist und ihre Zähne zwecks Festhaltens der Schraubengänge des Detektors (7) zu jenen des Kammes (14) korrespondieren.

8. Vorrichtung nach Anspruch 6, dadurch gekennzeichnet, daß die Wange (9h₁/9h₂) durch zwei zueinander parallele und voneinander in einem im wesentlichen der Dicke des Kammes (12) entsprechenden Abstand befindliche Flügel gebildet ist, zwischen denen zwecks Festhaltens der Schraubengänge des Detektors (7) die Zähne des Kammes eingreifen.

9. Vorrichtung nach einem der Ansprüche 2 bis 8, dadurch gekennzeichnet, daß die Bodenwand (10) zur Wand normallaufende nachgiebige Streben (10c/10d) aufweist, deren Länge etwas größer als die Höhe des Schachtes (9) ist, welche Streben in der Nähe der Außenfläche des Schachtes angeordnet sind und an ihrem Ende Profile (10c₄/10d₄) zur Verriegelung desselben in seiner Position mittels Klammerung aufweisen.

10. Vorrichtung nach Anspruch 9, dadurch gekennzeichnet, daß es zwei Streben (10c/10d) gibt, die zu beiden Seiten des halbzylindrischen Teils des Schachtes (9) einander gegenüberliegend angeordnet sind.

11. Vorrichtung nach einem der Ansprüche 2 bis 10, dadurch gekennzeichnet, daß der Schacht (9) eine halbzylindrische Wand (9a) aufweist, die durch zwei zueinander parallele plane Teile (9c/9d) verlängert ist, deren freie, zu den Erzeugenden des halbzylindrischen Teils parallele Ränder Klammern (9c₁/9d₁) zur Ermöglichung der Befestigung eines Reflektors (8) von zu jener des Schachtes (9) analoger Ausgestaltung und Halten des Reflektros an der Innenseite (9a) der Wand aufweisen.

12. Vorrichtung nach einem der Ansprüche 2 bis 4, bei welcher der Detektor (15) eine gerade Röhre ist, dadurch gekennzeichnet, daß die Röhre (15) im mittleren Teil des Schachtes (16) durch mindestens einen an der Wand des Schachtes befestigten Träger (16f/16g), dessen freies Ende die Röhre (15) eng umschließt, in Position gehalten ist.

13. Vorrichtung nach Anspruch 12, dadurch gekennzeichnet, daß sie zwei in der Symmetrieebene des Schachtes (16) angeordnete Träger umfaßt, von denen einer (16f) eine Aufnahme bildet, in der das freie Ende der Röhre eingesetzt ist, und von denen der andere (16g) eine Klammer bildet und konische Vorsprünge (16g₃/16g₄) zur Berührung des konischen Teils (15a) der Röhre aufweist.

14. Vorrichtung nach einem der Ansprüche 9 bis 13, dadurch gekennzeichnet, daß der Schacht Fenster (16e) aufweist, in welchen die Profile (10c₄/10d₄) der Streben (10c/10d) zur Verriegelung des Schachtes mittels Klammerung eingreifen.

15. Vorrichtung nach einem der Ansprüche 2 bis 14, dadurch gekennzeichnet, daß die Außenfläche des Schachtes (9/16) zur Reflektion von Störstrahlen, die die Ansaugluft aufheizen und so die vom Detektor (7/15) gelieferte Information verfälschen könnten, reflektierend ist.

**Claims**

1. Method for reducing the temperature range of a mechanical thermostat comprising a detector (7/15) constituted by a bulb or a capillary, wound into spires or straight, and which have been subjected to a surface-treatment to make them more absorbent, characterized in that said detector (7/15) is placed in front of a radiating wall (3) connected to a source of heat (5) and the detector (7/15) is partly surrounded by a reflector (8, 9a) placed in front of wall (3) in order to concentrate on the detector the radiation emitted by said wall (3).

2. Device for reducing the temperature range of a mechanical thermostat comprising a detector (7/15), constituted by a bulb or by a capillary, wound into spires or straight, which has been subjected to a surface treatment to make it more absorbent which device is designed for an electrical heat convector (1) comprising a heat exchanger (5) which extends in the longitudinal direction of the convector, said latter comprising, at one of the ends of said exchanger (5), a conduit (6) perpendicular thereto and extending over the full height of the convector, in which conduit (6) is placed the thermostat, characterized in that said conduit (6) is defined on the exchanger (5) side by a wall (3), which is placed in contact with said exchanger, said wall (3) radiating on the conduit (6) side, and in that the detector (7/15) is placed inside a sleeve (9) of semi-cylindrical general shape, which sleeve partly surrounds the detector (7/15) and of which the open side is situated in front of the radiating face (3a) of said wall (3) and in that the inner face (9a) of the sleeve is reflecting over all or part of its height in order to send onto the detector (7/15) the radiation emitted by said radiating wall (3).

3. Device according to claim 2, characterized in that said conduit (6) in which is placed the thermostat, is closed at its upper part by a plate (10), comprising an opening (10a) which fits into the space defined by said sleeve.

4. Device according to claim 3, characterized in that the sleeve (9) is situated close to said bottom plate (10) of the conduit (6) and in that said opening (10a) issues into the sleeve (9).

5. Device according to any one of claims 2 to 4, of which the thermostat detector is a capillary wound in helical spires (7) and takes on a cylindrical general shape, characterized in that said detector (7) is held in position in the center of the sleeve (9) by a comb-shaped support (12/14) fixed on the wall thereof and of which the crenels or teeth tightly enclose at least one of the spires of said detector (7).

6. Device according to claim 5, characterized in that said comb (12/14) cooperates with a rack

member ($9h_1$/$9h_2$/$9h_3$) fixed to the semi-cylindrical part of the sleeve (9) and extending in parallel to the generatrices of said semi-cylindrical part.

7. Device according to claim 6, characterized in that the rack member ($9h_3$) is crenelled, the crenels corresponding to those of the comb (14) for holding in the spires of the detector (7).

8. Device according to claim 6, characterized in that the rack member ($9h_1$/$9h_2$) is constituted by two parallel wings which are spaced apart of a distance substantially equal to the thickness of the comb (12) and between which the teeth or crenels of the comb are engaged in order to hold in the spires of the detector (7).

9. Device according to any one of claims 2 to 8, characterized in that said bottom wall (10) comprises flexible frame members (10c/10d) orthogonal to the wall of which the length is slightly greater than the height of the sleeve (9), said frame members being placed close to the outer face of the sleeve and being provided at their end with raised portions ($10c_4$/$10d_4$) in order to lock the sleeve in position by fastening.

10. Device according to claim 9, characterized in that the frame members (10c/10d) are two in number and are placed in opposite relationship on either side of the semi-cylindrical part of the sleeve (9).

11. Device according to any one of claims 2 to 10, characterized in that the sleeve (9) comprises a semi-cylindrical wall (9a) which is extended by two flat parallel parts (9c/9d), of which the free edges parallel to the generatrices of said semi-cylindrical part comprise fastening means ($9c_1$/$9d_1$) for fastening a reflector (8) of design similar to that of the sleeve (9) and for securing said reflector against the inner face (9a) of said wall.

12. Device according to any one of claims 2 to 4, of which the detector (15) is a straight bulb, characterized in that said bulb (15) is held in position in the center of the sleeve (16) by at least one support (16f/16g) fixed on the wall of the sleeve and of which the free end tightly encloses the said bulb (15).

13. Device according to claim 12, characterized in that it comprises two supports situated in the plane of symmetry of the sleeve (16) one of which supports (16f) forms a housing to receive the free end of the bulb while the other (16g) forms a fastening means and comprises conical impressions ($16g_3$/$16g_4$) designed to be brought in contact with the conical part (15a) of the bulb.

14. Device according to any one of claims 9 to 13, characterized in that the sleeve comprises apertures (16e) into which engage the raised portions ($10c_4$/$10d_4$) of said frame members (10c/10d) in order to lock the sleeve by fastening.

15. Device according to any one of claims 2 to 14, characterized in that the outer face of the sleeve (9/16) is reflecting in order to send back any stray radiations which tend to heat the suction air and thus distort the information picked up by the detector (7/15).

Fig. 1

Fig. 2

Fig. 4

Fig. 5

$10c_3$

$10c_4$

$10c$

F

$10b$

$10b$

$10$

$10e$

$10f$

$10c_3$

$10d_3$

$10c_4$

$10d_4$

$10c_2$

$10d$

$10d_2$

$10c$

$10c_1$

$10d_1$

$10b$

$10b$

$10f$

$10e$

$10c$

$10$

$10f$

$10b$

$10a_2$

$10a$

$10e$

$10a_1$

$10b$

$10b$

$10d$

Fig. 3

Fig. 7

Fig. 8

Fig. 6

Fig.10

Fig.11

Fig.9

Fig.12

Fig.13

Fig.14

14b

14

14a

14c

9j

9h4

9h3

9

9k

Fig.15

Fig.16

14a

14

d1

14b

9h3

9l

9j

9h4